**Europäisches Patentamt**

**European Patent Office**

**Office européen des brevets**

(19)

(11) Veröffentlichungsnummer: **0 256 157**
**B1**

# EUROPÄISCHE PATENTSCHRIFT

(12)

(45) Veröffentlichungstag der Patentschrift:
24.10.90

(21) Anmeldenummer: **86111334.8**

(22) Anmeldetag: **16.08.86**

(51) Int. Cl.⁵: **B29B 7/76**, B29C 67/22

(54) Mischkopf zum Vermischen zumindest zweier Kunststoff bildender Komponenten.

(43) Veröffentlichungstag der Anmeldung:
**24.02.88 Patentblatt 88/8**

(45) Bekanntmachung des Hinweises auf die Patenterteilung:
**24.10.90 Patentblatt 90/43**

(84) Benannte Vertragsstaaten:
**AT BE CH DE FR GB IT LI NL SE**

(56) Entgegenhaltungen:
EP-A- 0 039 856
EP-A- 0 062 182
EP-A- 0 079 510
EP-A- 0 088 936
EP-A- 0 093 958
EP-A- 0 143 196
EP-A- 0 186 078
DE-A- 3 340 889
DE-A- 3 427 326
DE-A- 3 427 327
DE-A- 3 521 236
DE-B- 1 067 207
FR-A- 2 345 285

(73) Patentinhaber: IBW Ingenieur-Büro Woltzel GmbH,
Rotdornweg 26, D-4530 Ibbenbüren1(DE)

(72) Erfinder: Woltzel, Heinz, Rotdornweg 26,
D-4530 Ibbenbüren 1(DE)

(74) Vertreter: Busse & Busse Patentanwälte,
Postfach 1226 Grosshandelsring 6,
D-4500 Osnabrück(DE)

## Beschreibung

Die Erfindung betrifft einen Mischkopf zum Vermischen zumindest zweier Kunstsoff bildender Komponenten nach dem Oberbegriff des Patentanspruchs 1.

Bei einem bekannten derartigen Mischkopf zum Vermischen von Kunststoff-Komponenten (DE-C 2 612 812), bei ihrer chemischen Reaktion vorzugsweise einen Schaumstoff, insbesondere einen Polyurethanschaum bilden, ist das in bezug auf den Führungskanal querbewegliche Drosselorgan mit einem Durchbruch versehen, dessen Querschnitt mindestens dem Querschnitt des Ausstoßkolbens entspricht. In der mit dem Führungs- bzw. Austrittskanal fluchtend übereinstimmenden Stellung des Durchbruchs des Drosselorgans ist eine mechanische Reinigung der Mischkammer und des Austrittskanals durch den Ausstoßkolben möglich, während in einer gegenüber dem Kanal quer versetzten Stellung des Durchbruchs des Drosselorgans durch Bildung einer verengten Übertrittsöffnung zwischen der Mischkammer und dem Inneren des Durchbruchs eine Wirbelkammer im Inneren des Durchbruchs gebildet ist, durch die die Vermischungsintensität der Reaktionskomponenten verbessert werden soll. Durch die Ausbildung einer solchen Wirbelkammer für das durch den Durchbruch des Drosselorgans hindurchgeführte flüssige Komponentengemisch entstehen in diesem große Turbulenzen, die auch in dem Austrittskanal nach dem Verlassen der Wirbelkammer keine in solchem Maße ausreichende Beruhigung erfahren, daß Fehlerstellen im Erzeugnis, insbesondere durch Lufteinschlüsse, vermieden sind.

Es ist ferner ein Mischkopf zum Erzeugen eines chemisch reaktionsfähigen Gemisches aus mindestens zwei Kunststoffkomponenten der angegebenen Art bekannt (DE-A 3 208 696), bei dem das Drosselorgan aus mehreren in Reihe oder versetzt nebeneinander und/oder hintereinander angeordneten Staukörpern besteht, die von entgegengesetzten Seiten der Mischkammer in diese einführbar sind. Auch hierbei ist zwar eine vorteilhafte mechanische Selbstreinigung des Austrittskanals und der Mischkammer durch den Ausstoßkolben bei aus der Mischkammer zurückgezogenen Staukörpern gegeben, jedoch erfährt auch in diesem bekannten Fall das durch eine Vielzahl von Quetschspalten hindurchgetriebene flüssige Komponentengemisch, das mit hoher Geschwindigkeit in die Mischkammer eingespritzt wird, keinen ausreichenden Abbau der entstandenen Turbulenzen, die ursächlich für Fehler im herzustellenden Erzeugnis, insbesondere einem Formteil, sind.

Der Erfindung liegt die Aufgabe zugrunde, einen Mischkopf zum Vermischen zumindest zweier Kunststoff bildender Komponenten der eingangs angegebenen Art zu schaffen, bei dem unter Erhalt der mechanischen Selbstreinigung von Austrittskanal und Mischkammer durch den Ausstoßkolben und einer intensiven Vermischung der Reaktionskomponenten mit konstruktiv einfachen, unproblematischen Mitteln eine Beruhigung des flüssigen Komponentengemisches nach dem Verlassen der Mischkammer in einem solchen Maße erreichbar ist, daß Fehler im herzustellenden Erzeugnis aufgrund von Mischungsturbulenzen weitestgehend vermieden sind.

Diese Aufgabe wird nach der Erfindung durch eine Ausgestaltung des Mischkopfes entsprechend dem Patentanspruch 1 gelöst. Bei dieser Ausgestaltung bildet das Drosselorgan am Austrittsende der Mischkammer einen sich über den Querschnitt des Austrittskanals hinweg erstreckenden, durch einen Staueffekt die Mischungsintensität verbessernden Drosselspalt, der sich zur Austrittsöffnung des Austrittskanals hin diffusorartig erweitert, um auf diese Weise innerhalb des Mischkopfes unter Ausnutzung des bekannten Diffusoreffektes eine so weitgehende Beruhigung des flüssigen Komponentengemisches, d.h. eine Umwandlung der turbulenten Strömung in eine im wesentlichen laminare Strömung, zu erreichen, daß Fehler im Erzeugnis, die sonst durch verbleibende Turbulenzen erzeugt werden, weitestgehend vermieden sind. Das Drosselorgan kann dabei besonders einfach nach Art eines Schiebers ausgebildet sein, der jedoch nicht mit einem Durchbruch für den Durchgang der Mischungskomponenten in Drosselstellung des Drosselorgans versehen ist, sondern allein mit seinem in den Austrittskanal eingreifenden Seitenrand den Drosselspalt bildet, während die von diesem Seitenrand ausgehende Randausnehmung lediglich in der Ausstoßstellung des Drosselorgans zum Einsatz kommt, in der die Randausnehmung mit dem Austrittskanal fluchtet, so daß es ohne weiteres möglich ist, mittels des Ausstoßkolbens das in der Mischkammer und im Austrittskanal verbleibende Reaktionsgemisch gegen Ende des Mischungs- bzw. Formfüllvorgangs auszustoßen, um so die gewünschte Selbstreinigung von Austrittskanal und Mischkammer herbeizuführen.

Der Führungs- bzw. Austrittskanal und der mit diesem querschnittsgleiche Ausstoßkolben können grundsätzlich jede beliebige, geeignete Querschnittsform aufweisen, wobei die Querschnittsform der Randausnehmung des Drosselorgans stets von einem querschnittsgleichen Abschnitt des Kanalquerschnitts gebildet ist, um die fluchtende Querschnittsprofilübereinstimmung der Randausnehmung des Drosselorgans und des Austrittskanals in der Ausstoßstellung des Drosselorgans zu gewährleisten. Im Interesse der Verwendung einfacher Dichtungselemente für den Ausstoßkolben wird zur Vermeidung von Dichtungsproblemen eine Ausgestaltung bevorzugt, gemäß welcher die Querschnittsfläche des Führungs- bzw. Austrittskanals kreisförmig ausgebildet und dementsprechend die Querschnittsfläche der Randausnehmung des Drosselorgans von einem deckungsgleichen Kreisabschnitt gebildet ist.

Zahlreiche weitere Merkmale und Vorteile der Erfindung ergeben sich aus den weiteren Unteransprüchen und der nachstehenden Beschreibung in Verbindung mit der Zeichnung, in der mehrere Ausführungsbeispiele des Gegenstands der Erfindung schematisch veranschaulicht sind. In der Zeichnung zeigen:

Fig. 1 einen Längsschnitt durch ein erstes Ausführungsbeispiel eines Mischkopfes in Mischstellung des Ausstoßkolbens und des Drosselorgans,

Fig. 2 einen Schnitt nach der Linie II-II der Fig. 1,

Fig. 3 einen Schnitt nach der Linie III-III der Fig. 2,

Fig. 4 einen Schnitt nach der Linie IV-IV der Fig. 2, Fig. 5 einen Schnitt nach der Linie V-V der Fig. 2,

Fig. 6 eine Darstellung entsprechend Fig. 1, wobei sich jedoch der Ausstoßkolben und das Drosselorgan in ihrer Ausstoß- bzw. Reinigungsstellung befinden,

Fig. 7 einen Schnitt nach der Linie VII-VII der Fig. 6,

Fig. 8 einen Längsschnitt entsprechend Fig. 2 durch ein weiteres Ausführungsbeispiel eines Mischkopfes in Mischstellung des Ausstoßkolbens und des Drosselorgans,

Fig. 9 einen Schnitt nach der Linie IX-IX der Fig. 8,

Fig. 10 einen Längsschnitt entsprechend Fig. 2 bzw. 8 durch ein weiteres Ausführungsbeispiel eines Mischkopfes in Mischstellung des Ausstoßkolbens und des Drosselorgans, Fig. 11 einen Schnitt nach der Linie XI-XI der Fig. 10,

Fig. 12 einen Schnitt nach der Linie XII-XII der Fig. 10 und

Fig. 13 eine Darstellung entsprechend Fig. 12 zur Veranschaulichung einer abgewandelten Betriebsstellung des Drosselorgans.

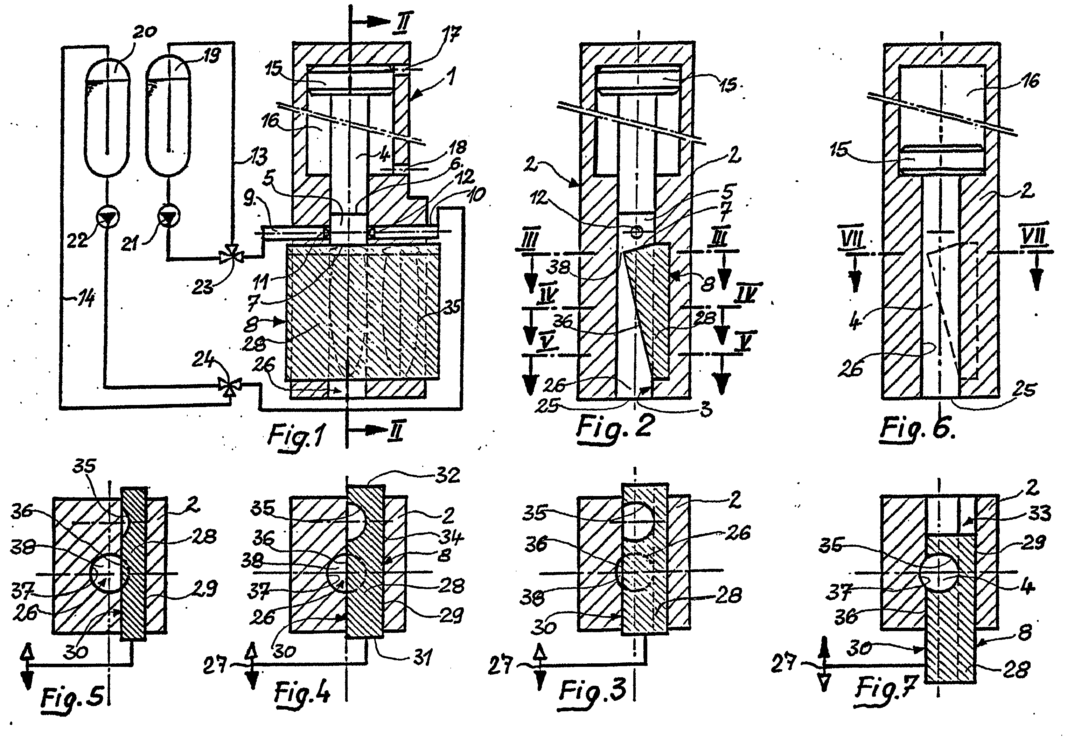

In der Zeichnung ist ein als Ganzes mit 1 bezeichneter Mischkopf zum Vermischen zumindest zweier Reaktionskomponenten gezeigt, die bei ihrer Reaktion einen Kunststoff, zum Beispiel einen Polyurethanschaum, bilden. Der Mischkopf 1 besteht aus einem Gehäuse 2 mit einem Führungskanal 3, in dem ein Ausstoßkolben 4 hin- und herverschieblich geführt ist. Ein Bereich des Führungskanals 3 bildet eine Mischkammer 5, die in der beispielsweise in den Fig. 1 und 2 gezeigten zurückgefahrenen Stellung des Ausstoßkolbens 4 von dessen freier Stirnseite 6 einenends begrenzt ist. Das andere Ende der Mischkammer 5 ist von der der Stirnseite 6 des Ausstoßkolbens 4 gegenüberliegenden Seite 7 eines Drosselorgans 8 begrenzt. Von Komponentenzuleitungen 9 und 10 münden Einlaßöffnungen 11 und 12 in die Mischkammer 5 ein. Rücklaufleitungen sind mit 13 und 14 bezeichnet. An seinem von der Mischkammer 5 abgewandten Ende ist der Ausstoßkolben 4 als beidseitig beaufschlagbarer Hydraulikkolben 15 ausgebildet, der in einem Zylinder 16 mit entsprechenden Leitungsanschlüssen 17 und 18 geführt ist.

In Fig. 1 sind ferner Vorratsbehälter 19 und 20 für die beiden Reaktionskomponenten dargestellt, von denen die Komponenten jeweils mittels einer Dosierpumpe 21,22 über die Zuleitungen 9,10 in die Mischkammer 5 nach dem Gegenstrominjektionsprinzip mit hoher Geschwindigkeit eingespritzt werden, um hier das Reaktionsgemisch zu bilden. Bei Ablauf der Injektionszeit werden Wegeventile 23,24 auf die Rücklaufleitungen 13,14 umgeschaltet, so daß die von den Vorratsbehältern 19,20 geförderten Komponenten im Kreislauf geführt werden. Zur Durchführung dieses Arbeitspiels kann der Mischkopf 1 in an sich bekannter Weise düsen-, druck- oder kolbengesteuert sein.

Das Drosselorgan 8 erstreckt sich in seiner Länge von der Mischkammer 5 im wesentlichen bis zur Austrittsöffnung 25 des in diesem Bereich einen Austrittskanal 26 bildenden Führungskanals 3. Dabei ist das Drosselorgan 8 in bezug auf den Austrittskanal 26 querbeweglich im Mischkopfgehäuse 2 abgestützt und zwischen einer Arbeits- bzw. Drosselstellung und einer Reinigungs- bzw. Ausstoßstellung hin- und herbewegbar. Diese Hin- und Herbeweglichkeit des Drosselorgans 8 ist in der Zeichnung durch Doppelpfeile 27 kenntlich gemacht.

Das Drosselorgan 8 ist bei dem in den Fig. 1 bis 7 dargestellten Ausführungsbeispiel von einer Schieberplatte 28 gebildet, die eine im Längsschnitt keilförmige Grundgestalt aufweist und, bezogen auf ihre Verschieberichtung 27, Seitenränder 29 und 30 sowie Stirnseiten 31 und 32 besitzt. An der Stirnseite 31 kann beispielsweise ein (nicht dargestelltes) Stellorgan für die Hin- und Herbewegung der Schieberplatte 28 angreifen. Dabei ist die Schieberplatte 28 als Ganzes querbeweglich in einer inneren Ausnehmung 33 des Mischkopfgehäuses geführt und abgestützt, die bei dem dargestellten an beiden Stirnseiten offen ist.

Während der im Mischkopfgehäuse 2 abgestützte Seitenrand 29 eine für seine Führung in der Ausnehmung 33 geeignete, insbesondere ebene Außenfläche 34 aufweist, ist der Seitenrand 30, der den Austrittskanal 26 schneidet, mit einer Randausnehmung 35 versehen, die über die Höhe der Schieberplatte 28 durchgeht und seine im übrigen ebene Außenfläche 36 unterbricht.

Die Querschnittsfläche des Führungs- bzw. Austrittskanals 3,26 und des querschnittsgleichen Ausstoßkolbens 4 ist bei dem dargestellten Beispiel kreisförmig ausgebildet, und dementsprechend weist die Randausnehmung 35 des Drosselorgans 8 einen Querschnitt in der Form eines mit dem Querschnittsprofil des Austrittskanals 26 deckungsgleichen Kreisabschnitts auf. Die im Längsschnitt keilförmige Grundgestalt des Drosselorgans 8 bzw. der Schieberplatte 28 ist dadurch erreicht, daß sich der Seitenrand 30 der Schieberplatte 28 mit seiner Außenfläche 36 zur Austrittsöffnung 25 des Austrittskanals 26 hin verjüngt, so daß in der aus den Fig. 1 bis 5 ersichtlichen Drosselstellung des Drosselorgans 8 der freie Querschnitt des Austrittskanals 26 von der Außenfläche 30 teilweise begrenzt und entsprechend reduziert ist. Auf diese Weise ist von der Außenfläche 30 mit der dieser gegenüberliegenden, den verbleibenden Teil des freien Kanalquerschnitts begrenzenden Wandfläche 37 des Austrittskanals 26 ein kreisabschnittförmiger Drosselspalt 38 mit zur Austrittsöffnung 25 hin zunehmender Querschnittsfläche gebildet. Die Außenfläche 36 der Schieberplatte 28 definiert dabei in Drosselstellung des Drosselorgans 8 in allen Querschnittsebenen eine Sehne des kreisförmigen Kanalquerschnitts, wie dies insbesondere aus den Querschnittsdarstellungen gemäß den Fig. 3 bis 5 ersichtlich ist, die Querschnitte in verschiedenen Höhen des Drosselspalts 38 zeigen und so dessen zur Austrittsöffnung 25 hin ständig größer werdende, kreisabschnittförmige Querschnittsfläche verdeutlichen. Dies bedeutet eine diffusorartige Erweiterung des Drosselspalts 38 zur Austrittsöffnung 25 hin, die zu einer weitgehenden Beruhigung des flüssigen Komponentengemisches führt.

In der Drosselstellung des Drosselorgans 8 ist die Randausnehmung 35 in einer Wartestellung außerhalb des Austrittskanals 26 im Mischkopfgehäuse 2 gehalten. Diese Stellung ist insbesondere aus den Fig. 3 bis 5 ersichtlich, die ferner verdeutlichen, daß, bedingt durch die sich zur Kanalaustrittsfläche 25 hin verjüngende Außenfläche 36 der Schieberplatte 28, die kreisabschnittförmige Querschnittsfläche der Randausnehmung 35 entsprechend der Vergrößerung der Querschnittsfläche des Drosselspalts 38 zur Kanalaustrittsöffnung 25 hin fortschreitend abnimmt. Dies ist dadurch bedingt, daß die Kreismittelpunkte der Querschnittsfläche des Führungs- bzw. Ausstoßkanals 3,26 einerseits und des sich über die Höhe des Drosselorgans 8 in seiner Größe ändernden Kreisabschnitts der Randausnehmung 35 andererseits in einer gemeinsamen, in Verschieberichtung 27 verlaufenden Vertikalebene angeordnet sind.

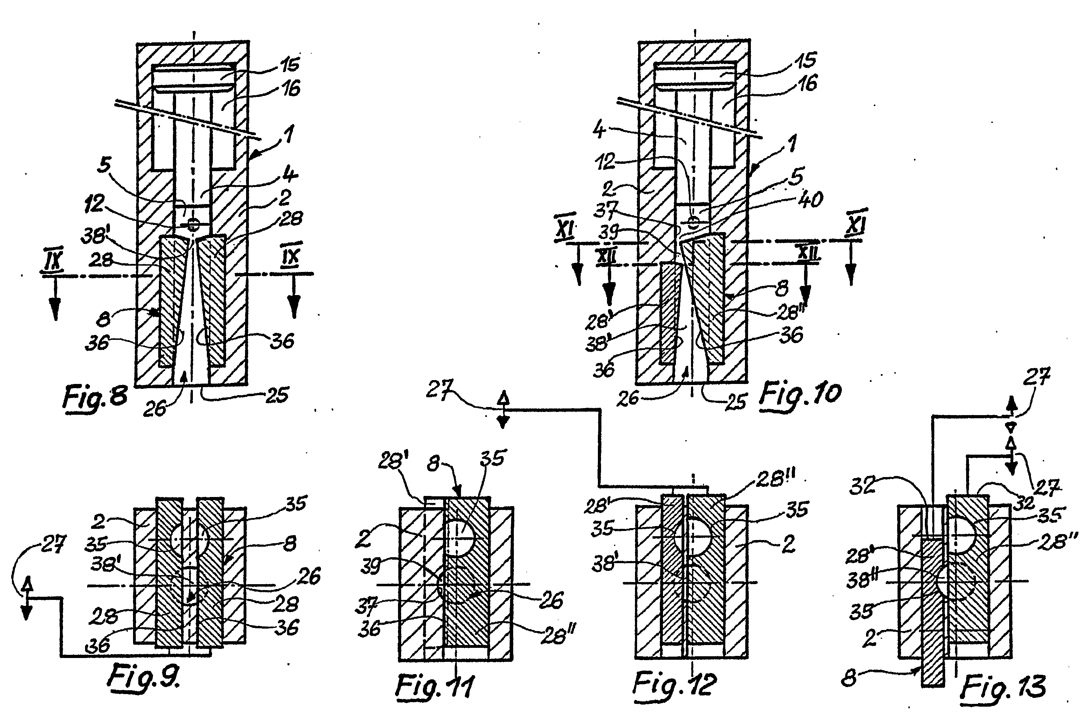

Hieraus folgt, daß bei einer Verschiebung des Drosselorgans 8 entsprechend dem Doppelpfeil 27 aus der in den Fig. 1 bis 5 veranschaulichten Drosselstellung in die in den Fig. 6 und 7 dargestellte Reinigungs- bzw. Ausstoßstellung die Randausnehmung 35 in durchgehend fluchtende Übereinstimmung mit dem Ausstoßkanal 26 gebracht worden ist, so daß der querschnittsgleiche Ausstoßkolben 4 durch den von der Randausnehmung 35 des Drosselorgans 8 und der Wandfläche 37 des Ausstoßkanals 26 gemeinsam gebildeten kreiszylindrischen Kanal zur Ausführung seines Ausstoß- und Reinigungshubes hindurch- und wieder zurück in Mischstellung geführt werden kann, in der auch das Drosselorgan 8 wieder in die Mischstellung gemäß den Fig. 1 bis 5 gebracht worden ist.

Bei dem Ausführungsbeispiel nach den Fig. 8 und 9 ist das Drosselorgan 8 von zwei Schieberplatten 28 gebildet, die mit ihren Außenflächen 36 einander gegenüberliegend im Mischkopfgehäuse 2 geführt sind. Die beiden Schieberplatten 28 bilden bei dieser Ausgestaltung mit ihren sich zur Kanalaustrittsöffnung 25 hin verjüngenden Außenflächen 36 einen im wesentlichen rechteckigen Drosselspalt 38′ mit zur Austrittsöffnung 25 hin diffusorartig zunehmender Querschnittsfläche. Lediglich an seinen beiden Schmalseiten ist der Querschnitt des Diffusorspalts 38′ von entsprechend der sich zur Austrittsöffnung 25 hin vergrößernden Querschnittsfläche ihrerseits größer werdenden Kreisbogenabschnitten des Kanalquerschnitts begrenzt.

In den Fig. 8 und 9 ist das Drosselorgan 8 in seiner Drosselstellung gezeigt. Durch eine Verschiebung der Schieberplatten 28 in Pfeilrichtung 27 werden die beiden Randausnehmungen 35 der beiden Schieberplatten 28 in fluchtende Übereinstimmung mit dem Austrittskanal 26 gebracht, so daß der Ausstoßkolben 4 seinen Reinigungshub ausführen kann, wie es oben in Verbindung mit dem ersten Ausführungsbeispiel ausführlich erläutert wurde. Dabei kann die Verschiebebewegung der Schieberplatten 28 mit Hilfe eines gemeinsamen Stellorgans erfolgen, das stirnseitig an den beiden Schieberplatten 28 angreift, die eine spiegelbildliche Querschnittsanordnung beidseits einer mittleren Symmetrielängsebene des Austrittskanals 26 aufweisen.

Bei dem weiteren Ausführungsbeispiel gemäß den Fig. 10 bis 13 ist das Drosselorgan 8 wiederum von zwei Schieberplatten 28′ und 28″ keilförmiger Grundgestalt gebildet, die in Pfeilrichtung 27 im Mischkopfgehäuse 2 hin- und herverschieblich geführt sind. Im Unterschied zu dem Ausführungsbeispiel nach den Fig. 8 und 9 weisen die Schieberplatten 28′ und 28″ eine ungleiche Höhe in Längsrichtung des Austrittskanals 26 auf, wobei die höhere Schieberplatte 28″ mit ihrer Außenfläche 36 gemeinsam mit der gegenüberliegenden Wandfläche 37 des Austrittskanals 26 in dem die niedrigere Schieberplatte 28′ überragenden Bereich in Drosselstellung eine Nachmischkammer 39 zwischen dem sich diffusorartig erweiternden Drosselspalt 38′ und der Mischkammer 5 bildet, mit der sie durch einen Verbindungsspalt 40 in Strömungsverbindung steht. An ihrem gegenüberliegenden Ende geht die Nachmischkammer 39 über eine spaltförmige Verengung in den Drosselspalt 38′ über. Die Nachmischkammer 39 besitzt aufgrund der in der dargestellten Drosselstellung in den kreisförmigen Austrittskanal 26 eingreifen Außenfläche 36 der Schieberplatte 28″ eine sich zum Diffusorspalt 38′ hin vergrößernde kreisabschnittförmige Querschnittsfläche, während der Diffusorspalt 38′ hierbei aufgrund der sich gegenüberliegenden ebenen Außenflächen 36 der beiden Schieberplatten 28′ und 28″ eine sich zur Austrittsöffnung 25 hin vergrößernde, im wesentlichen rechteckige Querschnittsfläche analog der Ausführungsform der Fig. 8 und 9 aufweist. Bei diesem Ausführungsbeispiel besitzt die Schieberplatte 28″ zur Ausbildung der Nachmischkammer 39 auch eine größere Breite, vor allem in dem die Schieberplatte 28′ überragenden oberen Bereich, in dem sie zur Ausbildung der Nachmischkammer 39 mit ihrer Außenfläche 36 nahe an die gegenüberliegende Wandfläche 37 des Austrittskanals 26 herangeführt ist.

Auch bei diesem Ausführungsbeispiel ist das Drosselorgan 8 in seiner Drosselstellung gezeigt und wird in Pfeilrichtung 27 verschoben, um in die Ausstoß- bzw. Reinigungsstellung gebracht zu werden, in der die einander gegenüberliegenden Randausnehmungen 35 der beiden Schieberplatten 28′ und 28″ in fluchtende Übereinstimmung mit dem Austrittskanal 26 gebracht sind, so daß der Ausstoßkolben 4 den Reinigungshub durch den vervollständigten Kreisquerschnitt ausführen kann. Zur Herbeiführung der Verschiebebewegung in Richtung des Doppelpfeils 27 kann wie im Falle des Ausführungsbeispiels nach den Fig. 8 und 9 ein gemeinsames Stellorgan vorgesehen sein, das stirnseitig an den Schieberplatten 28′,28″ angreift.

Bei der aus Fig. 13 ersichtlichen Abwandlung ist für die beiden Schieberplatten 28′ und 28″ für deren jeweilige Verschiebung entsprechend dem Doppelpfeil 27 jeweils ein gesondertes Stellorgan (nicht dargestellt) vorgesehen, das jeweils an der Stirnseite 32 der Schieberplatte 28′ bzw. 28″ angreift. Bei dieser Ausgestaltung ist neben der aus den Fig. 10 bis 12 ersichtlichen Betriebsart mit jeweils gleichförmig zwischen der Drossel- und der Ausstoßstellung verschobenen Schieberplatten 28′ und 28″ eine Betriebsart möglich, bei der eine der beiden Schieberplatten 28′,28″ in der Drosselstellung und die andere Schieberplatte in der Ausstoßstellung gehalten ist. Gemäß dem in Fig. 13 veranschaulichten Beispiel ist die Schieberplatte 28′ in Ausstoßstellung gehalten, während sich die Schieberplatte 28″ in Drosselstellung befindet. Durch diese gesonderte Betätigung der Schieberplatten 28′ und 28″ besteht die Möglichkeit,entweder nur einen entsprechend vergrößerten Drosselspalt 38″ vorzusehen, der sodann aufgrund der mit der Ausstoßkanalwand fluchtenden Anordnung der Randausnehmung 35 der Schieberplatte 28′ eine kreisabschnittförmige Querschnittsfläche analog dem Drosselspalt 38 gemäß dem ersten Ausführungsbeispiel aufweist. Statt dessen besteht die Möglichkeit, durch Hinzuschalten der Schieberplatte 28′ die Nachmischkammer 39 einzusetzen, um die intensive Vermischung der Reaktions komponenten bei gleichzeitiger gesteigerter Energievernichtung weiter zu verbessern.

Eine solche Nachmischkammer im unmittelbaren Anschluß an die Mischkammer 5 kann im übrigen gemäß einer nicht dargestellten weiteren Abwandlung auch durch eine Profilformung zumindest einer der einander gegenüberliegenden Außenflächen 36 der beiden Schieberplatten 28 des Drosselorgans 8 gebildet sein.

Es versteht sich, daß der Mischkopf bei sämtlichen Ausführungsformen sowohl für kontinuierliche Produktionsabläufe als auch intermittierend zur Herstellung von Formteilen eingesetzt werden kann. Der Ausstoßkolben 4 wird dabei stets dann in seine Reinigungsstellung gemäß den Fig. 6 und 7 gebracht, wenn ein Arbeitszyklus mit gegebenen Mischungskomponenten beendet ist. Die Einlaßöffnungen 11 und 12 für die Mischungskomponenten münden stets oberhalb der Eintrittsebene des Drosselspalts 38, 38′,38″ bzw. des Verbindungsspalts 40 in die Mischkammer 5 ein. Entsprechend der zeichnerischen Darstellung münden die Einlaßöffnungen 11 und 12 stets aus einander diametral gegenüberliegenden Wandbereichen des Führungskanals 3 in die Mischkammer 5 ein, so daß die Mischungskomponenten nach dem Gegenstrominjektionsprinzip in die Mischkammer 5 eingespritzt werden. Es versteht sich jedoch, daß die Eintrittsöffnungen 11 und 12 auch so in der Kanalwand des Führungskanals 3 angeordnet sein können, daß die austretenden Mischungskomponentenstrahlen in einem Winkel gegeneinander gerichtet sind.

Im übrigen sind bei den vorstehend beschriebenen Ausführungsbeispielen für gleiche bzw. entsprechende Teile jeweils die gleichen Bezugszeichen verwendet worden, wobei auf eine nochmalige Beschreibung der insoweit übereinstimmenden Teile verzichtet wurde.

**Patentansprüche**

1. Mischkopf zum Vermischen zumindest zweier Kunststoff bildender Komponenten, bestehend aus einem Gehäuse (2) mit einem einen querschnittsgleichen Ausstoßkolben (4) hin- und hergehbar aufnehmenden Führungskanal (3), der bereichsweise als Mischkammer (5) mit Eintrittsöffnungen (11, 12) für die Komponenten ausgebildet ist, die in der zurückgefahrenen Stellung des Ausstoßkolbens (4) einenends von dessen freier Stirnseite (6) und anderenends von einem Drosselorgan (8) begrenzt ist, das im Bereich zwischen der Mischkammer (5) und der gehäuseseitigen Austrittsöffnung (25) für das Komponentengemisch in bezug auf den in diesem Bereich einen Austrittskanal (26) für das Gemisch bildende Führungskanal (3) querbeweglich im Mischkopfgehäuse (2) abgestützt ist, dadurch gekennzeichnet, daß das Drosselorgan (8) mit einem (30) seiner beiden Seitenränder (29, 30) in den Austrittskanal (26) eingreift, eine von dem kanalseitigen Seitenrand (30) ausgehende Randausnehmung (35) aufweist, deren Querschnittsfläche einem Abschnitt der Querschnittsfläche des Austrittskanals (26) entspricht, und zwischen einer Ausstoßstellung, in der seine Randausnehmung (35) mit dem Austrittskanal (26) fluchtet, und einer Drosselstellung hin- und herbewegbar ist, in der es am strömungsabwärts gelegenen Ende der Mischkammer (5) mit seinem kanalseitigen Seitenrand (30) einen den Austrittskanal (26) querenden Drosselspalt (38; 30′; 38″) bildet, der sich entsprechend der Länge des sich von der Mischkammer (5) bis im wesentlichen zur Austrittsöffnung (25) des Austrittskanals (26) erstreckenden Drosselorgans (8) zur Austrittsöffnung (25) hin diffusorartig erweitert.

2. Mischkopf nach Anspruch 1, dadurch gekennzeichnet, daß die Querschnittsfläche des Führungs- bzw. Austrittskanals (3,26) kreisförmig ausgebildet und die der Randausnehmung (35) des Drosselorgans (8) von einem deckungsgleichen Kreisabschnitt gebildet ist.

3. Mischkopf nach Anspruch 2, dadurch gekennzeichnet, daß die Außenfläche (36) des kanalseitigen Seitenrandes (30) des in Drosselstellung befindlichen Drosselorgans (8) in allen Querschnittsebenen seines in den Austrittskanal (26) eingreifenden Bereichs eine Sehne des Kanalquerschnitts definiert.

4. Mischkopf nach einem der Ansprüche 1 bis 3, dadurch gekennzeichnet, daß der kanalseitige Seitenrand (30) des in Drosselstellung befindlichen Drosselorgans (8) eine den freien Kanalquerschnitt teilweise begrenzende und diesen reduzierende Außenfläche (36) darbietet, die sich zur Austrittsöffnung (25) hin verjüngt.

5. Mischkopf nach Anspruch 4, dadurch gekennzeichnet, daß die Außenfläche (36) des kanalseitigen Seitenrandes (30) des Drosselorgans (8) mit der dieser gegenüberliegenden, den verbleibenden Teil des freien Kanalquerschnitts begrenzenden Wandfläche (37) des Austrittskanals (26) einen kreisabschnittförmigen Drosselspalt (38) mit zur Austrittsöffnung (25) hin zunehmender Querschnittsfläche bildet.

6. Mischkopf nach einem der Ansprüche 1 bis 5, dadurch gekennzeichnet, daß das Drosselorgan (8) von einer im Mischkopfgehäuse (2) geführten Schieberplatte (28) gebildet ist.

7. Mischkopf nach einem der Ansprüche 1 bis 4, dadurch gekennzeichnet, daß das Drosselorgan (8) von zwei mit ihren kanalseitigen Außenflächen (36) einander gegenüberliegend im Mischkopfgehäuse (2) geführten Schieberplatten (28,28;28',28") gebildet ist, die mit ihren Außenflächen (36) einen im wesentlichen rechteckigen Drosselspalt (38') mit zur Austrittsöffnung (25) hin zunehmender Querschnittsfläche bilden.

8. Mischkopf nach Anspruch 6 oder 7, dadurch gekennzeichnet, daß die oder jede Schieberplatte (28,28',28") eine im Längsschnitt keilförmige Grundgestalt aufweist.

9. Mischkopf nach Anspruch 7 oder 8, dadurch gekennzeichnet, daß die beiden Schieberplatten (28,28) des Drosselorgans (8) eine spiegelbildliche Querschnittsanordnung beidseits einer mittleren Symmetrielängsebene des Austrittskanals (26) aufweisen.

10. Mischkopf nach Anspruch 7 oder 8, dadurch gekennzeichnet, daß die einander gegenüberliegenden kanalseitigen Außenflächen (36) der beiden Schieberplatten (28',28") des Drosselorgans (8) in Drosselstellung zwischen dem sich diffusorartig erweiternden Drosselspalt (38') und der Mischkammer (5) eine Nachmischkammer (39) bilden.

11. Mischkopf nach Anspruch 10, dadurch gekennzeichnet, daß die Mischkammer (5) und die Nachmischkammer (39) durch einen Verbindungsspalt (40) miteinander in Strömungsverbindung stehen.

12. Mischkopf nach Anspruch 10 oder 11, dadurch gekennzeichnet, daß die Nachmischkammer (39) durch eine Profilformung zumindest einer der einander gegenüberliegenden Außenflächen der beiden Schieberplatten des Drosselorgans (8) gebildet ist.

13. Mischkopf nach Anspruch 11 oder 12, dadurch gekennzeichnet,daß die beiden das Drosselorgan (8) bildenden Schieberplatten (28',28") eine ungleiche Höhe in Längsrichtung des Austrittskanals (26) aufweisen und daß die Nachmischkammer (39) von der kanalseitigen Außenfläche (36) der höheren Schieberplatte (28") mit der gegenüberliegenden Wandfläche (37) des Austrittskanals (26) in einem Bereich gebildet ist, in dem die höhere Schieberplatte (28") die niedrigere Schieberplatte (28') überragt.

14. Mischkopf nach Anspruch 13, dadurch gekennzeichnet, daß die Nachmischkammer (39) eine sich zum Diffusorspalt (38') hin vergrößernde kreisabschnittförmige Querschnittsfläche und der Diffusorspalt (38') eine sich zur Austrittsöffnung (25) hin vergrößernde, im wesentlichen rechteckige Querschnittsfläche aufweist.

15. Mischkopf nach einem der Ansprüche 7 bis 14, dadurch gekennzeichnet, daß den beiden Schieberplatten (28,28;28',28") ein gemeinsames oder je ein gesondertes Stellorgan für ihre Hin- und Herbewegung quer zur Längsachse des Führungs- bzw. Austrittskanals (3,26) zugeordnet ist.

**Revendications**

1. Tête de mélange pour mélanger au moins deux composants destinés à former une matière plastique, constituée d'un boîtier (2) présentant un canal de guidage (3), dans lequel un piston d'expulsion (4) de même section se déplace en un mouvement de va-et-vient, le canal de guidage formant localement une chambre de mélange (5) à orifices d'entrée (11, 12) pour les composants qui, dans la position rétractée du piston d'expulsion (4), est délimitée à une extrémité par la face d'about libre (6) de ce dernier et à l'autre extrémité par un organe d'étranglement (8) qui, dans la zone comprise entre la chambre de mélange (5) et l'orifice de sortie (25) côté du boîtier pour le mélange des composants, est monté transversalement mobile dans le boîtier (2) de la tête de mélange par rapport au canal de guidage (3), formant dans cette zone un canal de sortie (26) pour le mélange, caractérisée en ce que l'organe d'étranglement (8) s'engage par une (30) de ses deux faces latérales (29, 30) dans le canal de sortie (36), présente un évidement facial (35) partant de la face latérale (30) du côté du canal, l'aire en coupe de cet évidement correspondant à un segment de l'aire en coupe du canal de sortie (26) et pouvant se déplacer en un mouvement de va-et-vient entre une position d'expulsion (26), dans laquelle son évidement facial (35) est en ligne avec le canal de sortie (26), et une position d'étranglement, dans laquelle il forme, à l'extrémité de la chambre de mélange (5), disposée en aval, par sa face latérale (30) située du côté du canal, un passage étranglé (38, 38', 38") s'étendant sur toute la largeur du canal de sortie (26) et allant en s'élargissant à la manière d'un diffuseur en direction de l'orifice de sortie (25), d'une manière correspondant à la longueur de l'organe d'étranglement (8) qui s'étend depuis la chambre de mélange (5) en substance jusqu'à l'orifice de sortie (25) du canal de sortie (26).

2. Tête de mélange suivant la revendication 1, caractérisée en ce que l'aire en coupe du canal de guidage ou de sortie (3, 26) est d'une configuration circulaire et l'évidement facial (35) de l'organe d'étranglement (8) est constitué d'un segment de cercle coïncident.

3. Tête de mélange suivant la revendication 2, caractérisée en ce que la surface extérieure (36) de la face latérale (30), située du côté du canal, de l'organe d'étranglement (8) se trouvant en position d'étranglement, définit, dans tous les plans de coupe de sa partie engagée dans le canal de sortie (26), une corde de la section transversale du canal.

4. Tête de mélange suivant l'une quelconque des revendications 1 à 3, caractérisée en ce que la face latérale (30), située du côté du canal, de l'organe d'étranglement (8) se trouvant en position d'étranglement présente une surface extérieure (36) délimitant partiellement la section libre du canal et la réduisant, qui va en diminuant à mesure que l'on s'approche de l'orifice de sortie (25) .

5. Tête de mélange suivant la revendication 4, caractérisée en ce que la surface extérieure (36) de la face latérale (30), située du côté du canal, de l'organe d'étranglement (8), forme avec la surface de paroi (37) du canal de sortie (26) qui lui est opposée et qui délimite la partie restante de la section libre du canal, un passage étranglé (38) de section en forme de segment de cercle dont l'aire en coupe s'accroît à mesure que l'on s'approche de l'orifice de sortie (25).

6. Tête de mélange suivant l'une quelconque des revendications 1 à 5, caractérisée en ce que l'organe d'étranglement (8) est constitué d'une plaque coulissante (28) guidée dans le boîtier (3) de la tête de mélange.

7. Tête de mélange suivant l'une quelconque des revendications 1 à 4, caractérisée en ce que l'organe d'étranglement (8) est constitué de deux plaques coulissantes (28, 28; 28', 28") mutuellement opposées par leurs surfaces extérieures (36) situées du côté du canal et guidées dans le boîtier (2) de la tête de mélange, leurs surfaces extérieures (36) formant un passage étranglé (38') en substance rectangulaire dont l'aire en coupe s'accroît à mesure que l'on s'approche de l'orifice de sortie (25).

8. Tête de mélange suivant la revendication 6 ou 7, caractérisée en ce que la ou chaque plaque coulissante (28, 28', 28") présente une configuration de base cunéiforme en coupe longitudinale.

9. Tête de mélange suivant la revendication 7 ou 8, caractérisée en ce que les deux plaques coulissantes (28, 28') de l'organe d'étranglement (8) présentent une disposition en coupe énantiomorphe de part et d'autre d'un plan de symétrie longitudinal médian du canal de sortie (26).

10. Tête de mélange suivant la revendication 7 ou 8, caractérisée en ce que les surfaces extérieures (36) mutuellement opposées, du côté du canal, des deux plaques coulissantes (28', 38") de l'organe d'étranglement (8) en position d'étranglement forment une chambre de postmélange (39) entre le passage étranglé (38') s'élargissant à la manière d'un diffuseur et la chambre de mélange (5).

11. Tête de mélange suivant la revendication 10, caractérisée en ce que la chambre de mélange (5) et la chambre de postmélange (39) sont en communication d'écoulement via un passage de liaison (40).

12. Tête de mélange suivant la revendication 10 ou 11, caractérisée en ce que la chambre de postmélange (39) est formée par un profilage d'au moins une des surfaces extérieures opposées l'une à l'autre des deux plaques coulissantes de l'organe d'étranglement (8).

13. Tête de mélange suivant la revendication 11 ou 12, caractérisée en ce que les deux plaques coulissantes (28', 28") formant 1, l'organe d'étranglement (8) présentent une hauteur inégale dans le sens longitudinal du canal de sortie (26) et que la chambre de postmélange (39) est formée par la surface extérieure (36), du côté du canal, de la plaque coulissante plus haute (28") et par la surface de paroi opposée (37) du canal de sortie (26), dans une zone où la plaque coulissante plus haute (28") dépasse la plaque coulissante plus basse (28').

14. Tête de mélange suivant la revendication 13, caractérisée en ce que la chambre de postmélange (39) présente une aire en coupe définissant un segment de cercle et allant en augmentant en direction du passage formant diffuseur (38') et ce passage formant diffuseur (38') présente une aire en coupe en substance rectangulaire allant en augmentant en direction de l'orifice de sortie (25).

15. Tête de mélange suivant l'une quelconque des revendications 7 à 14, caractérisée en ce que les deux plaques coulissantes (28, 28; 28', 28") sont munies d'un organe de positionnement commun ou particulier pour leur mouvement de va-et-vient transversal à l'axe longitudinal du canal de guidage ou de sortie (3, 26).

## Claims

1. A mixing head for mixing at least two components forming a plastics material, consisting of a housing (2) with a guide channel (3) which receives a reciprocable ejecting piston (4) of the same cross-section and which is constructed locally in the form of a mixing chamber (5) with inlets (11, 12) for the components, which chamber, in the retracted position of the ejecting piston (4), is bounded at one end by the free end face (6) of the latter and at the other end by a throttle member (8) which is supported, in the region between the mixing chamber (5) and the outlet (25) at the housing side for the component mixture, in the mixing-head housing (2) for transverse movement in relation to the guide channel (3) forming an outlet channel (26) for the mixture in this region, characterised in that the throttle member (8) engages, with one (30) of its two lateral edges (29, 30), in the outlet channel (26), comprises a marginal recess (35) which originates from the lateral edge (30) at the channel side and the cross-sectional area of which corresponds to a portion of the cross-sectional area of the outlet channel (26), and can be moved backwards and forwards between an ejection position in which its marginal recess (35) is in alignment with the outlet channel (26) and a throttling position in which, at the down-stream end of the mixing chamber (5), it forms with its lateral edge (30) at the channel side a throttle gap (38; 38'; 38") crossing the outlet channel (26), which gap widens out like a diffuser towards the outlet (25) according to the length of the throttle member (8) extending from the mixing chamber (5) substantially as far as the outlet (25) of the outlet channel (26).

2. A mixing head according to claim 1, characterised in that the cross-sectional area of the guide or outlet channel (3, 26) is made circular and that of the marginal recess (35) in the throttle member (8) is formed by a congruent segment of a circle.

3. A mixing head according to claim 2, characterised in that the outer face (36) of the lateral edge (30) at the channel side, of the throttle member (8) when in the throttling position defines, in all cross-sectional planes of its region engaging in the outlet channel (26), a chord of the channel cross-section.

4. A mixing head according to any one of claims 1 to 3, characterised in that the lateral edge (30) at the channel side of the throttle member (8) when in the throttling position presents an outer face (36) which partially bounds the free channel cross-section and reduces this and which becomes narrower towards the outlet (25).

5. A mixing head according to claim 4, characterised in that the outer face (36) of the lateral edge (30) at the channel side of the throttle member (8) forms, with the wall face (37) of the outlet channel (26) situated opposite to it and bounding the remaining portion of the free channel cross-section, a throttle gap (38) in the form of a segment of a circle with a cross-sectional area increasing towards the outlet (25).

6. A mixing head according to any one of claims 1 to 5, characterised in that the throttle member (8) is formed by a sliding plate (28) guided in the mixing-head housing (2).

7. A mixing head according to any one of claims 1 to 4, characterised in that the throttle member (8) is formed by two sliding plates (28, 28; 28', 28") which are guided in the mixing-head housing (2) with their outer faces (36) at the channel side situated opposite one another and which form, with their outer faces (26), a substantially rectangular throttle gap (38') with a cross-sectional area increasing towards the outlet (25).

8. A mixing head according to claim 6 or 7, characterised in that the or each sliding plate (28, 28', 28") has a wedge-shaped basic shape in longitudinal section.

9. A mixing head according to claim 7 or 8, characterised in that two sliding plates (28, 28) of the throttle member (8) have a mirror-inverted cross-section arrangement at each side of a central longitudinal plane of symmetry of the outlet channel (26).

10. A mixing head according to claim 7 or 8, characterised in that, in the throttling position, the outer faces (36), situated opposite one another at the channel side, of the two sliding plates (28', 28") of the throttle member (8) form an additional mixing chamber (39) between the throttle gap (38') widening out like a diffuser and the mixing chamber (5).

11. A mixing head according to claim 10, characterised in that the mixing chamber (5) and the additional mixing chamber (39) are in flow communication with one another through a connecting gap (40).

12. A mixing head according to claim 10 or 11, characterised in that the additional mixing chamber (39) is formed by a profile shaping of at least one of the opposite outer faces of the two sliding plates of the throttle member (8).

13. A mixing head according to claim 11 or 12, characterised in that the two sliding plates (28', 28") forming the throttle member (8) have an unequal height in the longitudinal direction of the outlet channel (26), and that the additional mixing chamber (39) is formed by the outer face (36) at the channel side of the higher sliding plate (28") with the opposite wall face (37) of the outlet channel (26), in a region in which the higher sliding plate (28") rises above the lower sliding plate (28').

14. A mixing head according to claim 13, characterised in that the additional mixing chamber (39) has a cross-sectional area in the form of a segment of a circle becoming larger towards the diffuser gap (38') and the diffuser gap (38') has a substantially rectangular cross-sectional area becoming larger towards the outlet (25).

15. A mixing head according to any one of claims 7 to 14, characterised in that associated with the two sliding plates (28, 28; 28', 28") is a common control element or a separate one for each for their reciprocating movement transversely to the longitudinal axis of the guide or outlet channel (3, 26).

Fig.1

Fig. 2

Fig. 6.

Fig.5

Fig.4

Fig.3

Fig.7

EP 0 256 157 B1

Fig. 8

Fig. 9.

Fig. 10

Fig. 11

Fig. 12

Fig. 13